# EUROPEAN PATENT APPLICATION

(11) **EP 4 745 564 A1**
(43) Date of publication of application: **20.05.2026**
(21) Application number: 24839305.0
(22) Date of filing: 15.05.2024
(51) Int. Cl.: G01N 23/223, H05G 1/26

(54) **X-RAY FLUORESCENCE ANALYSIS DEVICE, WATER LEAKAGE MANAGEMENT METHOD FOR X-RAY FLUORESCENCE ANALYSIS DEVICE, INFORMATION STORAGE MEDIUM, AND PROGRAM**

(30) Priority: 11.07.2023 JP 2023113975
(71) Applicant: Rigaku Corporation, Akishima-shi Tokyo 196-8666 (JP)
(72) Inventor: KAWAKAMI, Hiroyuki, Takatsuki-shi, Osaka 569-1146 (JP)
(74) Representative: Lambacher, Michael
(86) International application number: PCT/JP2024/017983
(87) International publication number: WO 2025/013407

(57) **Abstract**

To alleviate the degree of trouble of an X-ray fluorescence spectrometer in the event of water leakage, by quickly detecting water leakage inside a spectroscopic chamber with high precision, provided is an X-ray fluorescence spectrometer including: a high-voltage power supply configured to apply a voltage to an electron beam source; an X-ray tube configured to irradiate a sample that is placed in a spectroscopic chamber with primary X-rays which are emitted by irradiating a target with a generated electron beam; a water supply pump configured to supply cooling water for cooling the target; a vacuum pump configured to discharge atmospheric air from the spectroscopic chamber; a vacuum gauge configured to measure a pressure of the spectroscopic chamber; and a control unit configured to determine, based on both of the pressure measured by the vacuum gauge and the voltage applied by the high-voltage power supply to the electron beam source, that the cooling water has leaked into the spectroscopic chamber, and stop operation of the water supply pump.

## Description

### Technical Field

The present invention relates to an X-ray fluorescence spectrometer, a method of managing water leakage of an X-ray fluorescence spectrometer, an information storage medium, and a program.

### Background Art

As an apparatus for analyzing an element contained in a sample, an X-ray fluorescence spectrometer is known. The X-ray fluorescence spectrometer irradiates a sample with primary X-rays, and performs analysis based on an intensity and energy of fluorescent X-rays exiting the sample. In a case of an analysis of a light element, measurement is executed with a spectroscopic chamber kept in vacuum in order to avoid absorption of X-rays by atmospheric air. The X-ray fluorescence spectrometer includes an X-ray tube for emitting primary X-rays. An anode portion, which is a target of the X-ray tube, generates heat when X-rays are emitted, and is accordingly cooled using cooling water.

In a neighborhood of the anode kept in contact with the cooling water, a flow path may be damaged by friction or vibrations to cause leakage of the cooling water into the X-ray tube. The cooling water that has leaked into the X-ray tube breaks a thin X-ray window of the X-ray tube and is pulled into the spectroscopic chamber in a vacuum state. Continued operation of the X-ray fluorescence spectrometer in this state may cause further breakage. Accordingly, when leakage of the cooling water is detected, it is required to quickly stop the operation of the X-ray fluorescence spectrometer in order to alleviate the degree of trouble.

For example, in Patent Literature 1 cited below, there is disclosed a rotating cathode type X-ray generation apparatus in which leaking cooling water is received by a pan and, when reaching of a predetermined water level is detected by a sensor for water detection, cessation of an electron beam for target irradiation and issuing of an alert are executed. In Patent Literature 2 cited below, there is disclosed a method of determining whether there is leakage of cooling water in a liquid-cooling electron tube based on a change in water pressure. In Patent Literature 3 cited below, there is disclosed a method of detecting water leakage of an electromagnetic wave generation apparatus using floating switch equipment. In Patent Literature 4 cited below, there is disclosed a method of manufacturing an X-ray tube that detects leakage of cooling water with a flow rate sensor and then stops feeding water. In Patent Literature 5 cited below, there is disclosed an X-ray diffraction apparatus including a safety apparatus for stopping a test when leakage of cooling water in an X-ray tube is detected.

### Citation List

### Patent Literature

[PTL 1] JP 2-197098 A
[PTL 2] JP 7-235266 A
[PTL 3] JP 2001-327855 A
[PTL 4] JP 9-167563 A
[PTL 5] JP 8-189907 A

### Summary of Invention

### Technical Problem

When a sensor that detects water leakage is placed in the spectroscopic chamber, sizes and positions of other parts placed inside the spectroscopic chamber are limited. There are also cases where the sensor cannot be placed in the spectroscopic chamber due to the size of the spectroscopic chamber. Some types of sensors may be incapable of accurate detection of water leakage. Further, depending on a position at which the sensor is placed, the sensor may fail to detect water leakage at an early stage of its occurrence, with the result that a certain amount of cooling water leaks into the spectroscopic chamber.

The present disclosure has been made in view of the problems described above, and an object of the present disclosure is to provide an X-ray fluorescence spectrometer capable of alleviating the degree of trouble in the event of water leakage, by quickly detecting water leakage inside a spectroscopic chamber with high precision.

### Solution to Problem

(1) According to one aspect of the present disclosure, there is provided an X-ray fluorescence spectrometer including: a high-voltage power supply configured to apply a voltage to an electron beam source; an X-ray tube configured to irradiate a sample that is placed in a spectroscopic chamber with primary X-rays which are emitted by irradiating a target with an electron beam generated in the electron beam source; a water supply pump configured to supply cooling water for cooling the target; a vacuum pump configured to discharge atmospheric air from the spectroscopic chamber; a vacuum gauge configured to measure a pressure of the spectroscopic chamber; and a control unit configured to determine, based on both of the pressure measured by the vacuum gauge and the voltage applied by the high-voltage power supply to the electron beam source, that the cooling water has leaked into the spectroscopic chamber, and stop operation of the water supply pump.
(2) In the above-mentioned X-ray fluorescence spectrometer, the control unit is configured to determine that the cooling water has leaked when the pressure measured by the vacuum gauge is higher than a predetermined value and the voltage applied by the high-voltage power supply to the electron beam source is lower than a predetermined value.
(3) In the above-mentioned X-ray fluorescence spectrometer, the control unit is configured to stop, when determining that the cooling water has leaked, the application of the voltage to the electron beam source.
(4) In the above-mentioned X-ray fluorescence spectrometer, the control unit is configured to stop, when determining that the cooling water has leaked, operation of the vacuum pump.
(5) In the above-mentioned X-ray fluorescence spectrometer, the control unit is configured to introduce, when determining that the cooling water has leaked, atmospheric air into the spectroscopic chamber.
(6) The above-mentioned X-ray fluorescence spectrometer further includes an information processing unit including: a reception unit configured to receive a user instruction; and a display unit, the display unit being configured to display, when the control unit or the information processing unit determines that the cooling water has leaked, information to inform of possible leakage of the cooling water into the spectroscopic chamber, and the control unit being configured to stop the operation of the water supply pump, when the reception unit receives an instruction to stop operation of the water supply pump from the user.
(7) According to one aspect of the present disclosure, there is provided a method of managing water leakage of an X-ray fluorescence spectrometer, the X-ray fluorescence spectrometer including: a high-voltage power supply configured to apply a voltage to an electron beam source; an X-ray tube configured to irradiate a sample that is placed in a spectroscopic chamber with primary X-rays which are emitted by irradiating a target with an electron beam generated in the electron beam source; a water supply pump configured to supply cooling water for cooling the target; a vacuum pump configured to discharge atmospheric air from the spectroscopic chamber; and a vacuum gauge configured to measure a pressure of the spectroscopic chamber, the method including the steps of: determining, based on both of the pressure measured by the vacuum gauge and the voltage applied by the high-voltage power supply to the electron beam source, whether the cooling water has leaked into the spectroscopic chamber; and, when it is determined that the cooling water has leaked into the spectroscopic chamber, stopping operation of the water supply pump.
(8) According to one aspect of the present disclosure, there is provided a non-transitory computer-readable information storage medium having stored thereon a program to be executed by a computer used in an X-ray fluorescence spectrometer, the X-ray fluorescence spectrometer including: a high-voltage power supply configured to apply a voltage to an electron beam source; an X-ray tube configured to irradiate a sample that is placed in a spectroscopic chamber with primary X-rays which are emitted by irradiating a target with an electron beam generated in the electron beam source; a water supply pump configured to supply cooling water for cooling the target; a vacuum pump configured to discharge atmospheric air from the spectroscopic chamber; and a vacuum gauge configured to measure a pressure of the spectroscopic chamber, the program causing the computer to execute the steps of: determining, based on both of the pressure measured by the vacuum gauge and the voltage applied by the high-voltage power supply to the electron beam source, whether the cooling water has leaked into the spectroscopic chamber; and, when it is determined that the cooling water has leaked into the spectroscopic chamber, stopping operation of the water supply pump.
(9) According to one aspect of the present disclosure, there is provided a program to be executed by a computer used in an X-ray fluorescence spectrometer, the X-ray fluorescence spectrometer including: a high-voltage power supply configured to apply a voltage to an electron beam source; an X-ray tube configured to irradiate a sample that is placed in a spectroscopic chamber with primary X-rays which are emitted by irradiating a target with an electron beam generated in the electron beam source; a water supply pump configured to supply cooling water for cooling the target; a vacuum pump configured to discharge atmospheric air from the spectroscopic chamber; and a vacuum gauge configured to measure a pressure of the spectroscopic chamber, the program causing the computer to execute the steps of: determining, based on both of the pressure measured by the vacuum gauge and the voltage applied by the high-voltage power supply to the electron beam source, whether the cooling water has leaked into the spectroscopic chamber; and, when it is determined that the cooling water has leaked into the spectroscopic chamber, stopping operation of the water supply pump.

### Advantageous Effects of Invention

According to the present disclosure, the degree of trouble of the X-ray fluorescence spectrometer can be alleviated in the event of water leakage by quickly detecting water leakage inside the spectroscopic chamber with high precision.

### Brief Description of Drawings

FIG. 1 is a diagram schematically illustrating an overall configuration of an X-ray fluorescence spectrometer.
FIGS. 2 are each a diagram schematically illustrating an interior of a spectroscopic chamber.
FIG. 3 is a diagram schematically illustrating an X-ray tube.
FIG. 4 is a diagram schematically illustrating an overall configuration of an information processing unit.
FIG. 5 is a flow chart illustrating a method of managing water leakage.
FIG. 6 is a flow chart for determining whether there is water leakage.

### Description of Embodiments

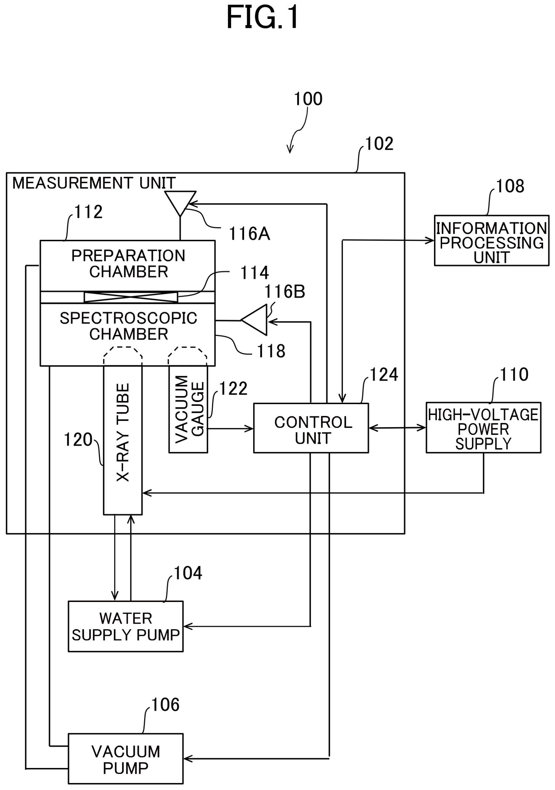

As illustrated in FIG. 1, a measurement unit 102, a water supply pump 104, a vacuum pump 106, an information processing unit 108, and a high-voltage power supply 110 are included. The measurement unit 102 includes a preparation chamber 112, a vacuum shutter 114, leak valves 116A and 116B, a spectroscopic chamber 118, an X-ray tube 120, a vacuum gauge 122, and a control unit 124.

The preparation chamber 112 is a chamber for loading and unloading a sample 202, and is also called a loading lock. The preparation chamber 112 is placed adjacent to the spectroscopic chamber 118, and the vacuum shutter 114 is placed between the preparation chamber 112 and the spectroscopic chamber 118. The vacuum shutter 114 is normally in a closed state, and is opened when the sample 202 is conveyed between the preparation chamber 112 and the spectroscopic chamber 118. The leak valve 116A is a valve for introducing the atmospheric air into the preparation chamber 112. The leak valve 116A is opened manually or under control of the control unit 124.

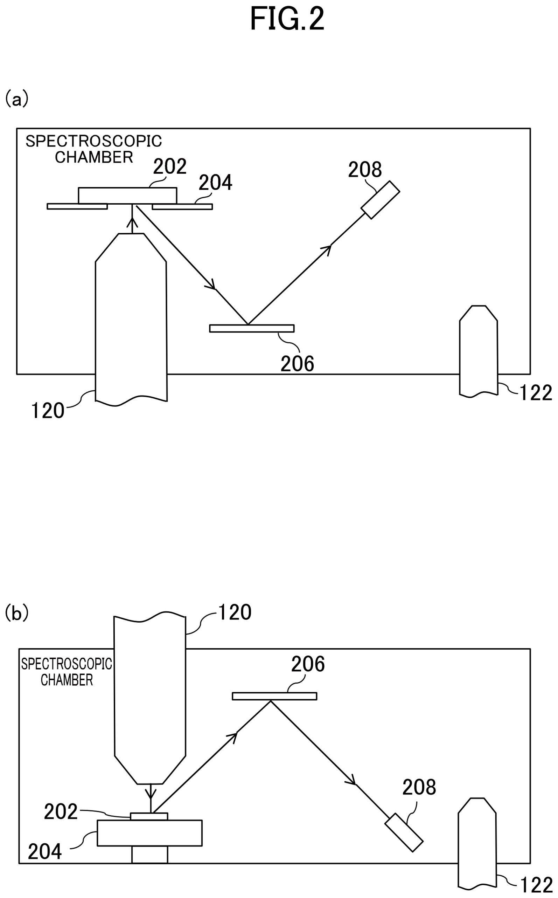

The spectroscopic chamber 118 is a chamber in which analysis of the sample 202 is performed. Specifically, as illustrated in FIG. 2(a), a sample stage 204, the X-ray tube 120, a spectroscopic device 206, a detector 208, and the vacuum gauge 122 are placed in the spectroscopic chamber 118. In this embodiment, a case where a part (around a window portion from which primary X-rays exit) of the X-ray tube 120 and a part of the vacuum gauge 122 are positioned inside the spectroscopic chamber 118, and other parts of the X-ray tube 120 and the vacuum gauge 122 are positioned outside the spectroscopic chamber 118, is taken as an example. The leak valve 116B is a valve for introducing the atmospheric air into the spectroscopic chamber 118. The leak valve 116B is opened manually or under control of the control unit 124.

The sample stage 204 is an x-y stage, and the sample 202 which is a measurement object is placed thereon. Primary X-rays emitted in the X-ray tube 120 irradiate a surface of the sample 202 which is an object to be measured. The spectroscopic device 206 disperses a fluorescent X-ray emitted from the sample 202 and having a predetermined wavelength. The detector 208 is placed at a position of incidence of the fluorescent X-ray dispersed by the spectroscopic device 206. The detector 208 is, for example, a proportional counter tube. The detector 208 measures the fluorescent X-ray and outputs pulse signals. A counter (not shown) counts the pulse signals output from the detector 208, to thereby obtain an intensity of the fluorescent X-ray. The spectroscopic device 206 and the detector 208 may be provided for each element to be analyzed, or a pair of one spectroscopic device 206 and one detector 208 may be rotationally moved to execute measurement. In the case of rotationally moving the pair of one spectroscopic device 206 and one detector 208, a mechanism (goniometer) for rotationally moving the pair of one spectroscopic device 206 and one detector 208 is placed in the spectroscopic chamber.

The X-ray tube 120 illustrated in FIG. 2(a) irradiates a lower surface of the sample 202 with X-rays from below the sample 202. That is, FIG. 2(a) is an illustration of the spectroscopic chamber 118 as an example in a case where an X-ray fluorescence spectrometer 100 is of a tube-below optics type. As illustrated in FIG. 2(b), the X-ray tube 120 may irradiate an upper surface of the sample 202 with X-rays from above the sample 202, that is, the X-ray fluorescence spectrometer 100 may be of a tube-above optics type. The present disclosure is particularly favorable for a large-sized wavelength-dispersive X-ray fluorescence spectrometer which uses a large number of high-power water-cooling X-ray tubes. However, the present disclosure can of course be used for energy-dispersive X-ray fluorescence spectrometers without causing any problem.

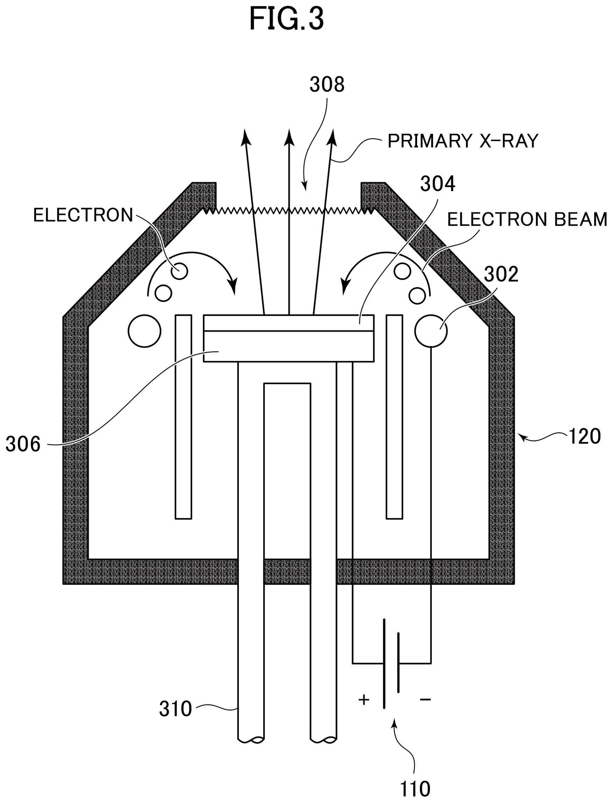

The X-ray tube 120 irradiates the sample 202 placed in the spectroscopic chamber 118 with primary X-rays which are emitted by applying a voltage to an electron beam source 302 and irradiating a target 304 with a generated electron beam. FIG. 3 is a diagram for illustrating outline of the X-ray tube 120. The X-ray tube 120 includes the electron beam source 302, the target 304, an anode 306, and a pipe 310.

In a case in which the X-ray tube 120 is of a hot cathode type, for example, the electron beam source 302 is a filament, and receives application of a negative voltage from a high-voltage power supply 110 to generate an electron beam. The target 304 is placed in contact with the anode 306, and the pipe 310 in which cooling water flows is connected to a rear surface of the anode 306. The anode 306 is formed of a material having a high degree of thermal conductivity. Application of a positive voltage to the anode 306 by the high-voltage power supply 110 causes irradiation of the target 304 with the electron beam generated from the electron beam source 302, with the result that primary X-rays are emitted. As a material of the target 304, a material that emits primary X-rays with high excitation efficiency is suitably selected based on energy at an absorption end of an element to be measured. The electron beam source 302 and the target 304 are placed inside a vacuum-exhausted casing (for example, a glass tube). The casing has an opening from which primary X-rays are extracted, and the opening is provided with an X-ray window 308 with a film covering the opening and being formed of a material which transmits primary X-rays. The film is formed of beryllium, for example. Most of energy of the electron beam irradiating the target 304 is converted into heat, and the target 304 and the anode 306 accordingly reach a high temperature during measurement. The flow of cooling water inside the pipe 310 cools the target 304 and the anode 306.

The electron beam source 302 sometimes breaks due to wear or other factors. In this case, no flow of a predetermined current (electron beam) is caused despite application of a high voltage between the electron beam source 302 and the anode 306 by the high-voltage power supply 110. In addition, in a case where the degree of vacuum drops due to infiltration of atmospheric air, leakage of cooling water, or the like inside the X-ray tube 120, electric discharge or the like is caused inside the X-ray tube 120 with the result that it is impossible to apply a predetermined high voltage. In the event of no application of a normal voltage between the electron beam source 302 and the anode 306, the high-voltage power supply 110 transmits a voltage anomaly signal to the control unit 124. The voltage anomaly signal may be transmitted from the high-voltage power supply 110 to the information processing unit 108 so that an instruction, described later, is issued from the information processing unit 108 to the control unit 124.

The vacuum gauge 122 measures a pressure of the spectroscopic chamber 118. To give a specific example, the vacuum gauge 122 is a thermal conductivity vacuum gauge such as a Pirani gauge. The vacuum gauge 122 measures the pressure of the spectroscopic chamber 118 and transmits the measured pressure to the control unit 124. The measured pressure may be transmitted from the vacuum gauge 122 to the information processing unit 108 so that the information processing unit 108 issues instructions (instructions that are described later and include an instruction to stop application of a voltage to the electron beam source 302 as well as instructions to the water supply pump 104, the vacuum pump 106, and others) to the control unit 124. The vacuum gauge 122 may be a vacuum gauge other than a thermal conductivity vacuum gauge as long as a pressure (particularly a pressure due to water vapor) inside the spectroscopic chamber 118 can be measured. For example, the vacuum gauge 122 may be a U-shaped vacuum gauge, an elastic vacuum gauge, a McLeod vacuum gauge, or a hot cathode ionization vacuum gauge.

Based on the instructions from the information processing unit 108, the control unit 124 controls operation of the components included in the measurement unit 102 as well as operation of the vacuum pump 106 and the water supply pump 104. The control unit 124 also controls, based on signals from the high-voltage power supply 110 and the vacuum gauge 122, operation of the vacuum pump 106, the water supply pump 104, and the leak valves 116A and 116B in a case of occurrence of water leakage. Specifically, the control unit 124 stops the operation of the vacuum pump 106 when the sample 202 is loaded into and unloaded from the preparation chamber 112, and puts the vacuum pump 106 into operation before measurement and during measurement. The control unit 124 puts the water supply pump 104 into operation during measurement and, when it is determined that cooling water has leaked, stops the operation of the water supply pump 104. The control unit 124 further acquires the intensity of the fluorescent X-ray from the counter (not shown), and transmits the intensity of the fluorescent X-ray to the information processing unit 108.

The water supply pump 104 supplies cooling water for cooling the target 304. Specifically, the water supply pump 104 includes a cooling mechanism, and has a function of cooling water inside the water supply pump 104. The water supply pump 104 is connected to the pipe 310 of the X-ray tube 120 via a connection pipe to supply the cooled water to the X-ray tube 120. The cooling water sent from the water supply pump 104 returns to the water supply pump 104 via another connection pipe. In this manner, the water supply pump 104 cools the anode 306 by cooling water that is to serve as a cooling medium and circulating the water between the X-ray tube 120 and the water supply pump 104. The water supply pump 104 may have a configuration that includes no cooling mechanism, with a separate cooling mechanism provided outside the water supply pump 104, or may have a configuration in which water is taken in from the outside and is not circulated.

The vacuum pump 106 discharges the atmospheric air from the preparation chamber 112 and the spectroscopic chamber 118. Specifically, the vacuum pump 106 is a pump that vacuumizes an interior of a chamber, such as a dry pump or a molecular pump, and operates under instructions from the control unit 124. Although one vacuum pump 106 is connected to the preparation chamber 112 and the spectroscopic chamber 118 in FIG. 1, a configuration in which the vacuum pump 106 for the preparation chamber 112 and the vacuum pump 106 for the spectroscopic chamber 118 are individually provided is preferred.

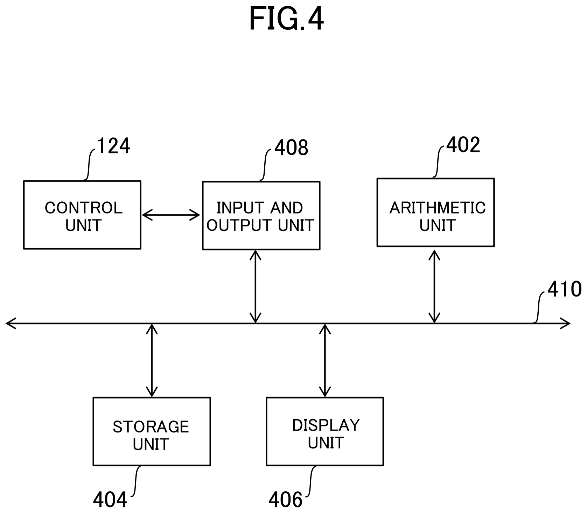

The information processing unit 108 performs communication to and from the control unit 124 to transmit and receive measurement data, and control the operation of the components connected to the control unit 124. To give a specific example, the information processing unit 108 is, as illustrated in FIG. 4, a computer connected to the control unit 124, and includes an arithmetic unit 402, a storage unit 404, a display unit 406, an input and output unit 408, and an internal bus 410.

The arithmetic unit 402 is a central processing unit (CPU), which is a processor, and performs various arithmetic operations. For example, based on the intensity of the fluorescent X-ray acquired from the control unit 124, the arithmetic unit 402 executes various arithmetic operations related to analysis of the sample 202, and a program for measurement.

The storage unit 404 is a non-transitory computer-readable information storage medium having stored thereon a program to be executed by a computer used in the X-ray fluorescence spectrometer 100. To give a specific example, the storage unit 404 is a random access memory (RAM), which is a memory, and an apparatus capable of stationarily recording information, such as a hard disk drive (HDD) or a solid-state drive (SSD). The storage unit 404 stores a program for managing water leakage. The program causes the computer to execute a step of determining whether the cooling water has leaked into the spectroscopic chamber 118 based on both of a pressure measured by the vacuum gauge 122 and a voltage applied to the electron beam source 302, and a step of stopping the operation of the water supply pump 104 when it is determined that the cooling water has leaked into the spectroscopic chamber 118. Details of these steps will be described later.

The display unit 406 is a so-called flat panel display such as a liquid crystal monitor, or the like, and displays an image. When the control unit 124 determines that the cooling water has leaked, the display unit 406 displays information to inform of possible leakage of cooling water into the spectroscopic chamber 118.

The input and output unit 408 is one or more interfaces through which the computer exchanges information with outside equipment, and is one or more pieces of equipment for enabling a user to input information, for example, a keyboard, a mouse, and a touch panel. The input and output unit 408 may include various ports for cable connection, and a controller for wireless connection. The input and output unit 408 acquires, from the control unit 124, the intensity of the fluorescent X-ray incident on the detector 208. The input and output unit 408 also functions as a reception unit for receiving, from the user, an instruction to stop the operation of the water supply pump 104.

The internal bus 410 connects the arithmetic unit 402, the storage unit 404, the display unit 406, and the input and output unit 408 to one another.

The control unit 124 determines that the cooling water has leaked into the spectroscopic chamber 118 based on both of the pressure measured by the vacuum gauge 122 and the voltage applied to the electron beam source 302, and then stops the operation of the water supply pump 104. Specifically, the control unit 124 determines that the cooling water has leaked when, for example, the pressure measured by the vacuum gauge 122 is higher than a predetermined value and the voltage applied to the electron beam source 302 is lower than a predetermined value. When determining that the cooling water has leaked, the control unit 124 stops the application of the voltage to the electron beam source 302. The control unit 124 also stops the operation of the vacuum pump 106 when determining that the cooling water has leaked. The control unit 124 further introduces the atmospheric air into the spectroscopic chamber 118 when determining that the cooling water has leaked. Although the high-voltage power supply 110 stops the operation of the water supply pump 104 and the vacuum pump 106 via the control unit 124 in FIG. 1, the high-voltage power supply 110 may directly issue instructions to the water supply pump 104 and the vacuum pump 106 without the intervention of the control unit 124.

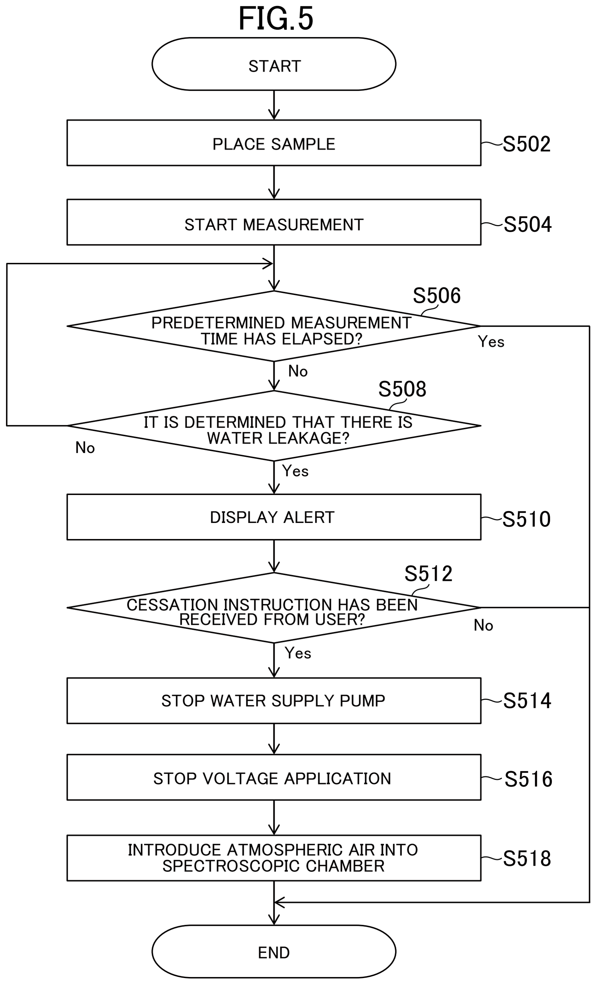

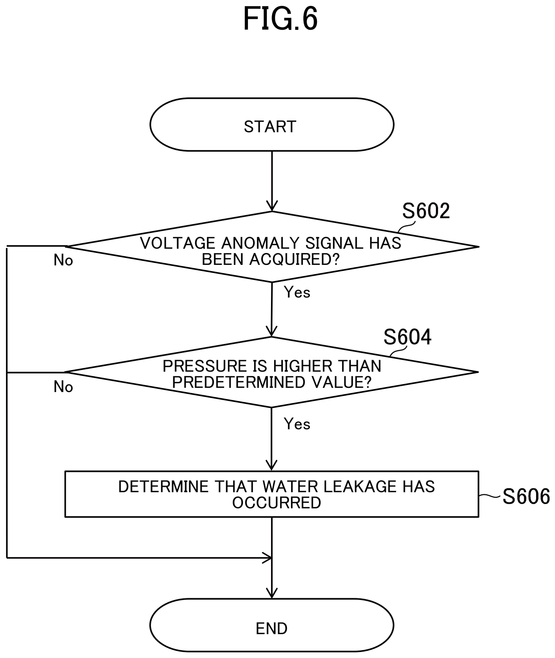

Detailed functions of the control unit 124 will be described with reference to a flow of a water leakage management method illustrated in FIG. 5 and FIG. 6. First, the sample 202 is placed on the sample stage 204 (Step S502). Specifically, the user places the sample 202 in the preparation chamber 112 with the vacuum shutter 114 closed, and then hermetically seals the preparation chamber 112.

Next, measurement is started (Step S504). To give a specific example, it is assumed that the information processing unit 108 is executing the program for measurement, and that given information about measurement is being displayed on the display unit 406 by the program. The user operates the input and output unit 408, which is a mouse, a keyboard, and the like, to input measurement conditions such as a measurement time, and start measurement. The information processing unit 108 instructs the control unit 124 to execute measurement under the measurement conditions.

When acquiring the instruction to start measurement, the control unit 124 controls the vacuum pump 106 so that the atmospheric air inside the preparation chamber 112 is discharged. The control unit 124 opens the vacuum shutter 114 when a pressure of the preparation chamber 112 reaches a predetermined value or lower, and controls a conveying apparatus (not shown) so that the sample 202 is conveyed from the preparation chamber 112 onto the sample stage 204 of the spectroscopic chamber 118. The control unit 124 notifies the high-voltage power supply 110 of the start of measurement, and the high-voltage power supply 110 then applies a voltage to the electron beam source 302 of the X-ray tube 120. An electron beam generated from the electron beam source 302 irradiates the target 304, and primary X-rays are consequently emitted from the target 304. The emitted primary X-rays irradiate the sample 202 placed in the spectroscopic chamber 118. At the same time as instructing the X-ray tube 120 to radiate the primary X-rays, the control unit 124 also instructs the water supply pump 104 to supply cooling water to the X-ray tube 120. The water supply pump 104 acquires the instruction and starts circulation of water between the water supply pump 104 and the X-ray tube 120.

When measurement is started, a flow for determining whether there is water leakage which is illustrated in FIG. 6 is executed until the measurement is ended (Step S508). The flow illustrated in FIG. 6 may be executed repeatedly for every predetermined amount of time, independently of the flow illustrated in FIG. 5, or may be executed when the control unit 124 acquires the voltage anomaly signal.

When the control unit 124 acquires the voltage anomaly signal (Step S602), whether the pressure of the spectroscopic chamber 118 is higher than the predetermined value is determined (Step S604). When the pressure of the spectroscopic chamber 118 is higher than the predetermined value, it is determined that water leakage has occurred in the spectroscopic chamber 118 (Step S606). Specifically, it is determined that water leakage has occurred when the pressure of the spectroscopic chamber 118 is greater than a predetermined absolute value (for example, 1 Pa). It may be determined that water leakage has occurred when the pressure of the spectroscopic chamber 118 exceeds a pressure greater than a pressure at which normal measurement is executed, a predetermined number of times (for example, 1,000 times).

The control unit 124 acquires the voltage anomaly signal from the high-voltage power supply 110 when there is no application of a normal voltage between the electron beam source 302 and the anode 306. The control unit 124 acquires, for every predetermined amount of time, the pressure measured by the vacuum gauge 122. The information processing unit 108 and the control unit 124 can perform communication between each other, and hence any one of the information processing unit 108 and the control unit 124 may execute the determination on whether there has been water leakage.

When it is determined in Step S508 that there is no water leakage, and it is found out in Step S506 that the predetermined amount of time has elapsed, the measurement is ended. When the measurement is ended, a result of the analysis is displayed on the display unit 406. When it is determined in Step S508 that there is water leakage, on the other hand, the display unit 406 displays an alert indicating possible leakage of cooling water into the spectroscopic chamber 118.

In response to the alert displayed on the display unit 406, the user inputs whether the measurement is to be halted or continued to the information processing unit 108. In a case where the reception unit receives an instruction to halt the measurement from the user, the control unit 124 stops the operation of the water supply pump 104 (Step S514).

The control unit 124 also stops the application of a voltage to the electron beam source 302 (Step S516).

The control unit 124 further stops the operation of the vacuum pump 106. The control unit 124 further opens the leak valve 116B to introduce the atmospheric air into the spectroscopic chamber 118 (Step S518). At this point, the control unit 124 may open the leak valve 116A to introduce the atmospheric air into the preparation chamber 112 as well.

As described above, according to the present disclosure, whether water leakage has occurred is determined using both of the measurement value of the vacuum gauge 122 and the voltage applied by the high-voltage power supply 110. In a case where water in a liquid form leaks into the spectroscopic chamber 118 kept in vacuum, the water vaporizes and the vapor raises the pressure of the spectroscopic chamber 118. In a case where only non-application of a normal voltage to the electron beam source 302 is observed, various causes other than water leakage are conceivable as an abnormality that has occurred in the X-ray fluorescence spectrometer 100. However, a state where there is no application of a normal voltage to the electron beam source 302 and the degree of vacuum of the spectroscopic chamber 118 drops is caused by water leakage into the spectroscopic chamber 118 in most cases. Thus, according to the present disclosure, whether there is water leakage can be determined quickly and accurately without addition of a sensor for detecting water leakage.

The present invention can be variously modified without being limited to the above-mentioned embodiment. The configuration of the X-ray fluorescence spectrometer 100 described above is described as one example, and the present invention is not limited thereto. The configuration described in the above-mentioned embodiment may be replaced by a configuration that is substantially the same as the configuration described in the above-mentioned embodiment, a configuration that exhibits the same action and effect as those of the configuration described in the above-mentioned embodiment, or a configuration that achieves the same object as that of the configuration described in the above-mentioned embodiment.

For example, in FIG. 1, the functions of the control unit 124 may be encompassed by the functions of the information processing unit 108. In FIG. 5, Step S510 and Step S512 may be omitted so that the stopping of the water supply pump 104 and other actions are executed as soon as water leakage is detected, without waiting for a person to determine that leakage has occurred. There is no particular order to Step S514, Step S516, and Step S518, and the order of executing Step S514, Step S516, and Step S518 may be changed.

### Reference Signs List

100 X-ray fluorescence spectrometer, 102 measurement unit, 104 water supply pump, 106 vacuum pump, 108 information processing unit, 110 high-voltage power supply, 112 preparation chamber, 114 vacuum shutter, 116 leak valve, 118 spectroscopic chamber, 120 X-ray tube, 122 vacuum gauge, 124 control unit, 202 sample, 204 sample stage, 206 collimator, 208 detector, 302 electron beam source, 304 target, 306 anode, 308 X-ray window, 310 pipe, 402 arithmetic unit, 404 storage unit, 406 display unit, 408 input and output unit, 410 internal bus

## Claims

1. An X-ray fluorescence spectrometer, comprising:
a high-voltage power supply configured to apply a voltage to an electron beam source;
an X-ray tube configured to irradiate a sample that is placed in a spectroscopic chamber with primary X-rays which are emitted by irradiating a target with an electron beam generated in the electron beam source;
a water supply pump configured to supply cooling water for cooling the target;
a vacuum pump configured to discharge atmospheric air from the spectroscopic chamber;
a vacuum gauge configured to measure a pressure of the spectroscopic chamber; and
a control unit configured to determine, based on both of the pressure measured by the vacuum gauge and the voltage applied by the high-voltage power supply to the electron beam source, that the cooling water has leaked into the spectroscopic chamber, and stop operation of the water supply pump.

2. The X-ray fluorescence spectrometer according to claim 1, wherein the control unit is configured to determine that the cooling water has leaked when the pressure measured by the vacuum gauge is higher than a predetermined value and the voltage applied by the high-voltage power supply to the electron beam source is lower than a predetermined value.

3. The X-ray fluorescence spectrometer according to claim 1 or 2, wherein the control unit is configured to stop, when determining that the cooling water has leaked, the application of the voltage to the electron beam source.

4. The X-ray fluorescence spectrometer according to claim 1 or 2, wherein the control unit is configured to stop, when determining that the cooling water has leaked, operation of the vacuum pump.

5. The X-ray fluorescence spectrometer according to claim 1 or 2, wherein the control unit is configured to introduce, when determining that the cooling water has leaked, atmospheric air into the spectroscopic chamber.

6. The X-ray fluorescence spectrometer according to claim 1 or 2, further comprising an information processing unit including: a reception unit configured to receive a user instruction; and a display unit,
wherein the display unit is configured to display, when the control unit or the information processing unit determines that the cooling water has leaked, information to inform of possible leakage of the cooling water into the spectroscopic chamber, and
wherein the control unit is configured to stop the operation of the water supply pump, when the reception unit receives an instruction to stop operation of the water supply pump from the user.

7. A method of managing water leakage of an X-ray fluorescence spectrometer,
the X-ray fluorescence spectrometer including:
a high-voltage power supply configured to apply a voltage to an electron beam source;
an X-ray tube configured to irradiate a sample that is placed in a spectroscopic chamber with primary X-rays which are emitted by irradiating a target with an electron beam generated in the electron beam source;
a water supply pump configured to supply cooling water for cooling the target;
a vacuum pump configured to discharge atmospheric air from the spectroscopic chamber; and
a vacuum gauge configured to measure a pressure of the spectroscopic chamber,
the method comprising the steps of:
determining, based on both of the pressure measured by the vacuum gauge and the voltage applied by the high-voltage power supply to the electron beam source, whether the cooling water has leaked into the spectroscopic chamber; and
stopping operation of the water supply pump when it has been determined that the cooling water has leaked into the spectroscopic chamber.

8. A non-transitory computer-readable information storage medium having stored thereon a program to be executed by a computer used in an X-ray fluorescence spectrometer,
the X-ray fluorescence spectrometer including:
a high-voltage power supply configured to apply a voltage to an electron beam source;
an X-ray tube configured to irradiate a sample that is placed in a spectroscopic chamber with primary X-rays which are emitted by irradiating a target with an electron beam generated in the electron beam source;
a water supply pump configured to supply cooling water for cooling the target;
a vacuum pump configured to discharge atmospheric air from the spectroscopic chamber; and
a vacuum gauge configured to measure a pressure of the spectroscopic chamber,
the program causing the computer to execute the steps of:
determining, based on both of the pressure measured by the vacuum gauge and the voltage applied by the high-voltage power supply to the electron beam source, whether the cooling water has leaked into the spectroscopic chamber; and
stopping operation of the water supply pump when it has been determined that the cooling water has leaked into the spectroscopic chamber.

9. A program to be executed by a computer used in an X-ray fluorescence spectrometer,
the X-ray fluorescence spectrometer including:
a high-voltage power supply configured to apply a voltage to an electron beam source;
an X-ray tube configured to irradiate a sample that is placed in a spectroscopic chamber with primary X-rays which are emitted by irradiating a target with an electron beam generated in the electron beam source;
a water supply pump configured to supply cooling water for cooling the target;
a vacuum pump configured to discharge atmospheric air from the spectroscopic chamber; and
a vacuum gauge configured to measure a pressure of the spectroscopic chamber,
the program causing the computer to execute the steps of:
determining, based on both of the pressure measured by the vacuum gauge and the voltage applied by the high-voltage power supply to the electron beam source, whether the cooling water has leaked into the spectroscopic chamber; and
stopping operation of the water supply pump when it has been determined that the cooling water has leaked into the spectroscopic chamber.
